# EUROPÄISCHE PATENTSCHRIFT

(11) **EP 1 100 290 B1**
(45) Veröffentlichungstag und Bekanntmachung des Hinweises auf die Patenterteilung: **29.03.2006**
(21) Anmeldenummer: 00250364.7
(22) Anmeldetag: 31.10.2000
(51) Int. Cl.: H05B 6/10, H05B 6/40, H05B 6/44, F16L 59/20

(54) **Verfahren und Vorrichtungen zur Vorwärmung eines Rohrstrangs im Bereich von Rundschweissnähten**
Method and apparatus for preheating tubing near a girthweld
Méthode et appareils de préchauffage d'un tube au niveau de la zone de soudure circulaire

(30) Priorität: 11.11.1999 DE 19955751
(43) Veröffentlichungstag der Anmeldung: 16.05.2001
(73) Patentinhaber: EUPEC PipeCoatings GmbH, 45473 Mülheim a. d. Ruhr (DE)
(72) Erfinder: Mally, Günter, Dipl.-Ing., 59077 Hamm (DE); Blome, Peter A., Dipl.-Kfm., 44623 Herne (DE)
(74) Vertreter: Meissner, Peter E.

(56) Entgegenhaltungen:
- WO-A-96/28683
- US-A- 4 961 798

## Beschreibung

Die Erfindung betrifft ein Verfahren zur Vorwärmung eines Rohrstrangs im Bereich von Rundschweißnähten für eine nachfolgende Aufbringung einer Kunststoffummantelung im Sinne einer Nachisolierung, wobei die Nachisolierung zeitlich dicht auf den Vorgang des Rundnahtschweißens folgt. Ferner betrifft die Erfindung eine Vorrichtung zur Durchführung dieses Verfahrens.

Stahlrohre, die werksseitig mit einer Kunststoffummantelung zum Zwecke des Korrosionsschutzes versehen sind, werden üblicherweise beim Zusammenbau zu einer Rohrleitung durch Rundschweißnähte miteinander verbunden. Damit die Kunststoffummantelung durch die während des Schweißvorgangs der Rundschweißnaht in die zusammenzufügenden Stahlrohre eingetragene Wärme nicht zerstört wird, werden üblicherweise die Rohrenden in metallischem Zustand belassen. Die werksseitige Kunststoffummantelung endet also im Regelfall z. B. 100 bis 150 mm vor dem jeweiligen Rohrende. Nach der Zusammenfügung durch die Rundschweißnaht muß der unbeschichtete Bereich zur Verhinderung von Korrosionsangriffen ebenfalls wirksam isoliert werden. Zweckmäßigerweise wird hierfür der gleiche Ummantelungsaufbau gewählt, wie er werksseitig auf die einzelnen Rohrteilstücke bereits aufgebracht ist.

Eine besonders bewährte Kunststoffummantelung weist einen dreischichtigen Aufbau mit einer Epoxyharzgrundschicht, einer darüber gelegten Äthylencopolymerisat-Kleberschicht und einer abschließenden Polyäthylen-Deckschicht auf. Für besonders anspruchsvolle Einsatzzwecke wird anstelle des Polyäthylen auch Polypropylen verwandt, wobei dann als Kleber ein Propylen-Copolymerisat angewendet wird. Die als Haftvermittler dienende Epoxyharz-Schicht wird üblicherweise in Form eines Feinteiligen Pulvers elektrostatisch auf das beispielsweise auf 180 - 200°C vorgewärmte metallisch-blanke Stahlrohr aufgetragen, so daß es unter Einwirkung der Oberflächentemperatur zu einem geschlossenen Film aufschmilzt und aushärten kann. Die Kleberschicht wird zu einem Zeitpunkt aufgetragen, zu dem diese Aushärtung noch nicht abgeschlossen ist, um einen besonders intensiven Verbund zwischen den beiden Schichten herzustellen. Die Aufbringung der Kleberschicht und der Polyäthylen- oder Polypropylen-Deckschicht kann vorzugsweise durch das Schlauchextrusionsverfahren oder aber durch das Wickelverfahren mittels extrudierter Folienbänder erfolgen. Letzteres wird insbesondere bei Rohren mit größeren Durchmessern angewendet.

Während bei der werksseitigen Beschichtung der einzelnen Stahlrohre in jeder Hinsicht relativ gleichmäßige und gut beherrschbare Verfahrensbedingungen gegeben sind, bereiten die Verhältnisse unter Baustellenbedingungen vielfach erhebliche Probleme, wenn es darum geht, den Bereich der Rundschweißnaht an einem Rohrstrang in der gleichen Weise zu beschichten, also nachzuisolieren, wie dies werksseitig möglich ist. Um eine praktisch gleich hochwertige Beschichtung bei der Nachisolierung wie bei der werksseitigen Kunststoffummantelung zu erreichen, muß insbesondere eine weitgehend gleichmäßige Temperatur an der Oberfläche des Nachisolierbereichs eingestellt werden. Das bedeutet, daß der Unterschied zwischen der höchsten und der niedrigsten Temperatur im nachzuisolierenden Bereich möglichst gering sein soll. Bei einer Soll-Temperatur von z.B. 200°C sollte die Schwankungsbreite nicht größer sein als etwa 10-20%. Das bedeutet also, daß die Temperatur z.B. nicht unter 190°C und nicht über 210°C liegen darf.

Eine solche Forderung läßt sich vergleichsweise leicht durch induktive Erwärmung mittels bekannter Induktoren erreichen, wenn der Rohrstrang insgesamt eine gleichmäßige Ausgangstemperatur aufweist. Dies kann bei der Verlegung an Land ohne weiteres gewährleistet werden. Schwieriger ist dies jedoch bei der Verlegung von Offshore-Rohrleitungen mittels eines Verlegeschiffes.

Bei einem bekannten Rohrverlegungsverfahren werden zur Steigerung der Vertegeteistung längere Rohrteitstränge vorgefertigt, die aus den werksseitig vorgegebenen Rohrteillängen durch Rundschweißnähte miteinander verbunden sind. Die Bereiche um die Rohrschweißnähte können beispielsweise noch an Land nachisoliert werden. Aufgrund der Größen der Rohrteilstränge muß dann an Bord nur noch ein Bruchteil der insgesamt für die Verlegung der Rohrleitung erforderlichen Rundschweißnähte gelegt werden. Die Aneinanderfügung der Rohrteilstränge läuft dabei jeweils nach einem vorgeschriebenen Takt ab. Im einzelnen bedeutet dies, daß für die Aufbringung der Nachisolierung im Bereich der an Bord erzeugten Rundschweißnaht nur sehr wenig Zeit zur Verfügung steht. Die Nachisolierung muß also zeitlich dicht auf den Vorgang des Rundnahtschweißens erfolgen.

Zur Qualitätsüberwachung werden die Rundschweißnähte unmittelbar nach dem Schweißvorgang auf zerstörungsfreiem Wege mittels Ultraschall untersucht. Die Ankopplung der Ultraschallprüfköpfe erfolgt dabei üblicherweise mittels Wasser. Um diese Ankopplung nicht durch Dampfblasen zu stören, ist eine entsprechende vorherige Abkühlung der Rohrschweißnaht notwendig. Dennoch verbleibt ein erheblicher Teil der durch den Schweißvorgang in den Rohrstrang eingetragenen Wärme im Bereich der Nachisolierung. Dies ist ganz besonders bei dickwandigen Rohren der Fall, die für die Verlegung in Tiefseegebieten notwendig sind. Im einzelnen bedeutet dies, daß nach Durchführung der Ultraschallprüfung durch die aus dem Inneren der dicken Rohrwand nachströmende Wärme nachträglich wieder eine erhebliche Erhöhung der Oberflächentemperatur eintritt. Wie Untersuchungen gezeigt haben, ist die Temperatur insbesondere bei dickwandigen Rohren nach der Ultraschallprüfung im unmitelbaren Nahbereich der Rohrschweißnaht am höchsten und nimmt zu beiden Seiten der Schweißnaht mit zunehmendem Abstand bis auf Umgebungstemperatur ab.

Da wegen der vorgegebenen kurzen Taktzeit die für einen axialen Temperaturausgleich erforderliche Zeit nicht zur Verfügung steht, kommt es bei der in üblicher Weise durchgeführten induktiven Erwärmung der Nachisolierungszone zur Erzielung der für die Epoxyharz-Schicht erforderlichen Vorwärmtemperatur zu sehr unterschiedlichen Temperaturen im Oberflächenbereich. Dies ist verständlich, wenn man bedenkt, daß die Oberfächentemperatur an der Stelle, an der die werksseitige Kunststoffummantelung beginnt, vor der induktiven Erwärmung beispielsweise etwa 20°C beträgt, während gleichzeitig im Bereich der Rundschweißnaht eine Temperatur von über 150°C vorliegt. Diese Temperaturdifferenzen im Oberflächenbereich sind auch nach der induktiven Erwärmung noch zu einem großen Teil festzustellen. Das kann bei der Auftragung des Epoxyharzes dazu führen, daß beispielsweise an den äußersten Stellen des Nachisolierungsbereichs das Epoxyharz-Pulver nicht einmal ausreichend aufschmilzt, um einen geschlossenen Film zu bilden, während im unmittelbaren Bereich der Rohrschweißnaht die Aushärtung wegen der hohen Temperatur bereits beendet ist, bevor die Kleberschicht aufgetragen worden ist.

Aus der DE 542 791 A ist ein Verfahren zum Trocknen oder Vulkanisieren der Isolierung elektrischer Leitungen bekannt, bei dem der leitende Kern der elektrischen Leitung durch eine um die Leitung herumgelegte Induktionsspule erwärmt wird. Ferner ist aus der DE 22 57 135 A ein Verfahren zur Beschichtung eines Stahlrohrs mit einer thermoplastischen Kunststoffummantelung bekannt, bei dem auf die Oberfläche des Stahlrohrs eine als Haftmittel dienende Schicht eines heißhärtenden duroplastischen Harzes und darüber eine oder mehrere thermoplastische Kunststoffschichten z. B. aus Äthylencopolymerisat und Polyäthylen aufgetragen wird. Die heißhärtende duroplastische Harzschicht wird bei diesem Verfahren nach Beendigung der Aufbringung der thermoplastischen Kunststoffschicht durch induktive Erhitzung des Stahlrohrs ausgehärtet, indem das Stahlrohr kontinuierlich durch eine Induktionsspule hindurchgeführt wird. Schließlich ist aus der EP 0 072 962 A ein Verfahren zur Beschichtung eines Metallrohrs mit Kunststoff bekannt, bei dem ein bandförmiges Beschichtungsmaterial mit einem Harz um das Rohr herumgewickelt wird, wobei das Rohr anschließend zur Aushärtung des Harzes kontinuierlich induktiv erwärmt wird. Ein Hinweis auf die besondere Problematik einer Nachisolierung von Rundschweißnähten eines bereits mit Kunststoff beschichteten Rohrstrangs, bei dem die Rundschweißnähte durch den Schweißprozess noch warm sind, ergibt sich aus diesen Schriften nicht.

In der W096/28683 ist ein Verfahren zur Nachisolierung eines Rohrstranges im Bereich der Rundschweißnaht offenbart, bei dem die noch ummantelten Endbereiche der beiden zu verbindenden Rohre mit einem Drahtgeflecht aus Metall versehen werden und über den nach zu isolierenden Bereich einschließlich des Drahtgeflechtes eine mit einem auf der Innenseite eine Klebeschicht aufweisende Muffe geschoben wird.

Mittels Gasheizung wird die Muffe erwärmt, so dass sie auf den nach zu isolierenden Bereich aufschrumpft. Ein über den gesamten Bereich geschobener Induktor erwärmt insbesondere den Drahtgeflechtbereich, was zu einer mechanischen Verklammerung zwischen der Muffe und der Rohrisolierung führt.

Die US 4,961,798 zeigt eine Vorrichtung zur Nachisolierung eines Rohrstranges im Bereich der Rundschweißnaht, die als drehbare Vorrichtung um den nach zu isolierenden Bereich legbar ist. In der Vorrichtung sind mehrere über den Umfang verteilte angeordnete Induktionsflachspulen vorgesehen, die den zu isolierenden Bereich des Rohrstranges aufheizen. Danach wird ein schrumpfbares Band, das außen mit Polyethylene und innen mit einem aufschmelzbaren Strukturmaterial versehen ist, mit einer Andrückrolle auf das Rohr gewickelt.

Im Artikel "Adjustable Induction-Heating Coil (NTIS Tech Notes 1991 (April), Springfield, VA, US, Seite 341) ist eine Vorrichtung zur Erwärmung von Rundzugproben zur Durchführung eines Warmzugversuches offenbart. Diese besteht aus einem Induktor, der in drei Spulenbereiche unterteilt ist, die in Reihe geschaltet sind und von einer Stromquelle aus beaufschlagt werden. Die drei Spulenbereiche können eine unterschiedliche Anzahl von Windungen aufweisen und sind axial zueinander verschiebbar angeordnet, um Anpassungen hinsichtlich eines gleichmäßigen Temperaturprofils vornehmen zu können.

Eine Vorrichtung zur Erwärmung eines Rohrstranges, der Abschnitte mit unterschiedlicher Wanddicke aufweist, zeigt US 4,442,331. Die Erwärmung erfolgt induktiv mittels eines um den Rohrstrang gelegten Coils, dessen einzelne Windungen zu- und abschaltbar sind. Der Rohrstrang bewegt sich mit konstanter Transportgeschwindigkeit durch das Coil und je nach einlaufender Wanddicke werden Windungen zu- und abgeschaltet.

Aufgabe der vorliegenden Erfindung ist es daher, ein gattungsgemäßes Verfahren zur Vorwärmung eines Rohrstrangs dahingehend zu verbessern, dass trotz der durch einen unmittelbar vorhergehenden Schweißvorgang örtlich eingetragenen Wärme eine weitgehend gleichmäßige Temperatur im gesamten Bereich der Nachisolierung gewährleistet ist. Ferner soll eine Vorrichtung zur Durchführung dieses Verfahrens angegeben werden.

Gelöst wird diese Aufgabe hinsichtlich des Verfahrens dadurch, dass zur Erzielung einer möglichst gleichmäßig hohen Oberflächentemperatur die Vorwärmung in der Weise durchgeführt wird, dass im Verlauf der axialen Länge des Bereichs der Nachisolierung auf die Rohroberfläche bezogen unterschiedliche Wärmeenergiemengen in dem Rohrstrang angebracht werden. Dabei wird der Wärmeenergieeintrag im Nahbereich der Rundschweißnaht jeweils geringer gehalten als in den beiderseits daran anschließenden Endbereichen des Nachisolierbereichs. Die Erfindung sieht also vor, in den Teilbereichen des Nachisolierbereichs, die eine von vornherein bereits vergleichsweise hohe Temperatur aufweisen, eine geringere Wärmemenge bei der Vorwärmung einzubringen als in den übrigen Bereichen, die von vornherein eine geringere Temperatur aufweisen.

Vorzugsweise wird die Vorwärmung als induktive Erwärmung vorgenommen, wenngleich es grundsätzlich auch möglich ist, die erforderliche Wärme z.B. durch Infrarotstrahler aufzubringen. Die induktive Erwärmung ermöglicht die Anwendung besonders hoher Leistungen und somit die Durchführung der Vorwärmung in sehr kurzer Zeit.

In einer Ausführungsform der Erfindung ist vorgesehen, die Erwärmung gleichzeitig über die gesamte axiale Länge des Nachisolierbereichs vorzunehmen. Nach einer anderen Ausführungsform ist vorgesehen, diese Erwärmung abschnittsweise zeitlich nacheinander über die axiale Länge des Nachisolierbereichs durchzuführen.

Der elektrische Strom für die induktive Erwärmung wird zweckmäßigerweise durch Kondensatorentladung erzeugt. Die Höhe der freigesetzten Kondensatorladung entspricht dabei also der in den Rohrstrang eingetragenen Wärmemenge.

Das erfindungsgemäße Verfahren kann zweckmäßigerweise in der Weise durchgeführt werden, daß im Bereich der Nachisolierung in axialer Richtung nebeneinander mehrere Induktionsspulen um den Rohrstrang herum angeordnet werden und die einzelnen Induktionsspulen durch Stromquellen unterschiedlicher Leistung gespeist werden. Dadurch läßt sich in axialer Richtung eine den Erfordernissen entsprechende unterschiedliche Wärmemenge bezogen auf die axiale Länge oder die Rohroberfläche erzeugen, so daß nach dem Eintrag dieser Wärme eine weitgehend gleiche Oberflächentemperatur im Nachisolierbereich herrscht.

Um die erforderliche elektrische Energie für die einzelnen Induktionsspulen genauer zu bestimmen, kann eine Sensorik zur Erfassung des vorliegenden Temperaturprofils entlang der Rohrachse vorgesehen sein. Aufgrund der festgestellten Temperatur kann dann die erforderliche Energiemenge für die jeweilige Induktionsspule errechnet werden. Es kann aber auch vorgesehen sein, daß diese Energiemenge jeweils fest eingestellt ist, da die Oberflächentemperatur bei Einhaltung eines gleichmäßigen Arbeitstaktes zwischen den entsprechenden Teilbereichen der einzelnen aufeinander folgenden Nachisolierungsbereiche nur vergleichsweise wenig schwankt.

Eine Vorrichtung zur Durchführung des erfindungsgemäßen Verfahrens kann in unterschiedlicher Weise ausgebildet sein, je nachdem ob die Erwärmung gleichzeitig über die gesamte axiale Länge des Nachisolierungsbereichs erfolgt oder abschnittsweise in zeitlich nacheinander gestaffelten Einzelschritten. Nach einem ersten Aspekt der Erfindung ist ein Induktor für eine induktive Vorwärmung vorgesehen, der peripher um den Rohrstrang legbar und von einer Stromquelleneinrichtung mit elektrischem Strom speisbar ist. Erfindungsgemäß ist dieser Induktor in mindestens drei koaxial nebeneinander anordbare Spulenbereiche aufgeteilt, von denen ein erster im unmittelbaren Nahbereich der Rundschweißnaht anbringbar ist, während die übrigen sich in axialer Richtung des Rohrstrangs zu beiden Seiten des ersten Spulenbereichs daran anschließen. Diese Spulenbereiche sind in der Weise mit angepaßter elektrischer Leistung beaufschlagbar, daß die Dichte des auf die Rohroberfläche bezogenen Induktionsstroms im Nahbereich der Rundschweißnaht des Rohrstrangs kleiner ist als in den axial daran anschließenden Bereichen. Bei dieser Ausführungsform liegt praktisch die gesamte Länge des Nachisolierbereichs im Einflußbereich der mindestens drei Spulenbereiche.

Zumindest der erste Spulenbereich ist als von den übrigen Spulenbereichen separate Spule ausgebildet. Dies ermöglicht eine besonders einfache Beeinflussung der von den einzelnen Spulenbereichen in den Rohrstrang einzutragenden Wärmemenge, da die Ströme in den einzelnen Spulenbereichen völlig separat einstellbar sind. Selbstverständlich ist es auch möglich, den unterschiedlichen Wärmeeintrag durch den konstruktiven Aufbau der einzelnen Spule, d.h. durch unterschiedliche Windungsdichte und unterschiedliche spezifische Widerstände zu beeinflussen.

Die einzelnen Spulenbereiche sind jeweils an unterschiedliche Stromquellen angeschlossen. Da die Temperaturverteilung zu beiden Seiten der Rundschweißnaht im wesentlichen spiegelbildlich zueinander verläuft, kann es auch zweckmäßig sein, wenn die entsprechend spiegelbildlich bezüglich des ersten Spulenbereichs einander gegenüberliegenden (baugleichen) Spulenbereiche jeweils gemeinsam in Serienschaltung an dieselbe Stromquelle angeschlossen sind. Somit werden die entsprechenden Spulenbereiche jeweils mit derselben elektrischen Energie beaufschlagt, so daß in die von ihnen überdeckten Teilbereiche des Nachisolierungsbereichs die gleichen Wärmemengen eingetragen werden.

Eine besonders einfache Steuerung der erforderlichen Induktionsströme ergibt sich, wenn die Stromquellen jeweils als Kondensatoren ausgebildet sind, da die freizusetzende elektrische Energie jeweils anhand der Ladung der Kondensatoren bemessen werden kann. Zweckmäßigerweise erfolgt die Ladung der Kondensatoren jeweils durch eine gemeinsame elektrische Energieversorgungseinrichtung. Dadurch bleibt der erforderliche Anlagenaufwand gering.

Es empfiehlt sich, den Induktor konstruktiv so auszubilden, daß er in Umfangsrichtung geteilt aufgeführt ist, also beispielsweise aus zwei Halbschalen besteht, die auf einfache Weise um den Rohrstrang gelegt und zu einer funktionsfähigen Einheit zusammengefügt werden können. Dadurch muß der Induktor nicht vom freien Rohrende über die gesamte anzuschweißende Rohrstrangteillänge bis zur Schweißstelle, also dem Nachisolierungsbereich geschoben werden, sondern kann unmittelbar am Nachisolierungsbereich montiert werden.

Nach einem zweiten Aspekt der Erfindung überdeckt der Induktor lediglich einen Bruchteil der axialen Länge des Nachisolierungsbereichs und ist mit angepaßter Geschwindigkeit und/oder angepaßter elektrischer Leistung in der Weise relativ zum Rohrstrang axial bewegbar, daß während der Bewegung der auf die Rohroberfläche bezogene Wärmeenergieeintrag im Nahbereich der Rundschweißnaht geringer ist als in den daran anschließenden Endbereichen des Nachisolierungsbereichs. Bei dieser Lösung der erfindungsgemäßen Vorrichtung werden einzelne Teilabschnitte des Nachisolierungsbereichs also zeitlich nacheinander erwärmt. Es kommt hierbei lediglich auf die Relativbewegung zwischen dem Rohrstrang und dem Induktor an. Das bedeutet also, daß grundsätzlich auch bei ortsfest gehaltenem Induktor der Rohrstrang in entsprechender Weise bewegt werden kann. Im Regelfall läßt sich die Bewegung jedoch einfacher bewerkstelligen, wenn der Induktor selbst entsprechend verfahren wird, da dabei die zu bewegenden Massen erheblich geringer sind.

In vorteilhafter Weiterbildung der Erfindung ist eine Steuer- oder Regeleinrichtung vorgesehen, die die Bewegungsgeschwindigkeit des Induktors im Nahbereich der Rundschweißnaht deutlicher höher hält als in den daran anschließenden Endbereichen. Es ist aber auch möglich, die Geschwindigkeit des Induktors über die gesamte Länge des Nachisolierungsbereichs konstant zu halten und statt dessen eine Steuer- und Regeleinrichtung vorzusehen, die die elektrische Leistung des Induktors so einstellt, daß diese zeitlich variiert, wobei die elektrische Leistung während des Passierens des Nahbereichs der Rundschweißnaht deutlich niedriger ist als jeweils während des Passierens der anschließenden Endbereiche. Selbstverständlich kann die Vorrichtung auch so ausgestaltet sein, daß beide Vorgehensweisen miteinander kombiniert werden, d.h. daß sowohl die elektrische Leistung des Induktors als auch dessen Bewegungsgeschwindigkeit zeitlich variiert werden.

Es kann auch eine Steuereinrichtung vorgesehen sein, die den Induktor mehrmals über die axiale Länge des Nachisolierbereichs hinwegbewegt, so daß die einzelnen Abschnitte des Nachisolierungsbereichs jeweils in Teilschritten auf die vorgesehene Vorwärmtemperatur gebracht werden. Dadurch kann ein besonders effektiver Ausgleich der Oberflächentemperatur erzielt werden.

Um den Einsatz der erfindungsgemäßen Vorrichtung unabhängig von den jeweils gewählten Taktzeiten bei einfachster Bedienung zu ermöglichen, kann eine Sensorik zur Erfassung des Profils der Oberflächentemperatur in axialer Richtung des Rohrstrangs vorgesehen sein. Anhand der erfaßten Temperaturdaten kann dann über eine Recheneinrichtung der für die einzelnen Abschnitte des Nachisolierbereichs erforderliche Wärmeenergieeintrag bestimmt und der elektrischen Steuereinrichtung vorgegeben werden. Diese Sensorik kann ebenso wie die konstruktive Teilung des Induktors in Umfangsrichtung bei beiden Grundvarianten der erfindungsgemäßen Vorrichtung zweckmäßig sein.

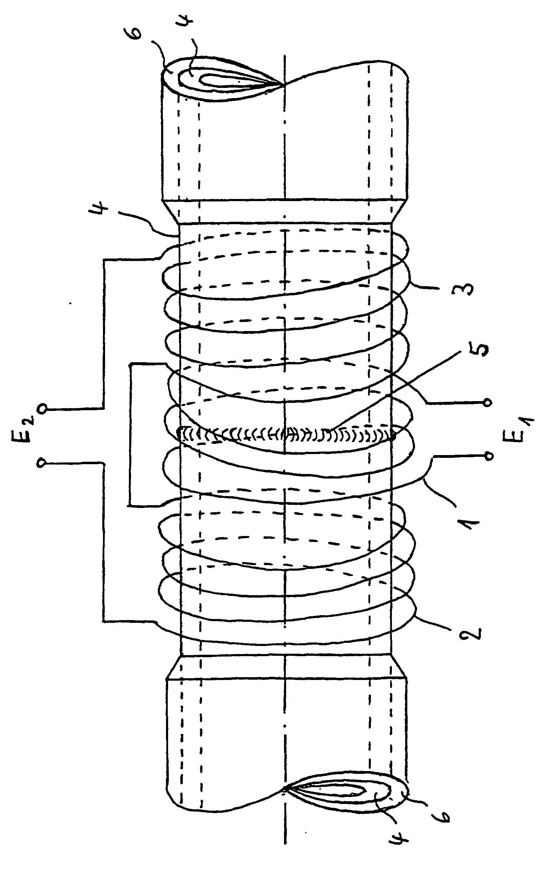

Anhand des in der einzigen Figur schematisch dargestellten Ausführungsbeispiels wird die Erfindung nachfolgend näher erläutert.

Die Figur zeigt in einer Draufsicht in schematischer Weise einen durch eine Rundschweißnaht 5 zusammengefügten Teil eines Rohrstrangs 4. Der Rohrstrang 4 ist mit einer werksseitigen Kunststoffummantelung 6 versehen, die an den ursprünglichen Rohrenden mit einem im Abstand vom Rohrende abgeschrägten Ende ausläuft, so daß das eigentliche Rohrende metallisch blank und ohne Ummantelung ist. Die axiale Länge dieses unbeschichteten Bereichs beträgt beispielsweise 100-150 mm, so daß die gesamte axiale Länge des jeweiligen Nachisolierungsbereichs in der Nähe der Rundschweißnaht 5, die nachträglich noch zu beschichten ist, im Regelfall zwischen 200 und 300 mm liegt. In diesem Nachisolierungsbereich ist um den Rohrstrang 4 herum ein Induktor gelegt, der aus den drei Spulenbereichen 1, 2, 3 besteht. Der Spulenbereich 1 ist so angeordnet, daß sein Wirkbereich im unmittelbaren Nahbereich der Rundschweißnaht 5 liegt. Die beiden anderen Spulenbereiche 2, 3 schließen sich jeweils unmittelbar links und rechts daneben an und überdecken die restliche axiale Länge des Nachisolierungsbereichs. Im vorliegenden Fall sind die Spulenbereiche 1, 2, 3 so geschaltet, daß der erste Spulenbereich 1 an eine Stromquelle E₁ anschließbar ist, während die beiden Spulenbereiche 2, 3 an eine andere Stromquelle E₂ anschließbar sind, wobei die Spulenbereiche 2, 3 in Serie geschaltet sind, so daß durch beide Spulenbereiche 2, 3 genau derselbe Strom fließt Bei jeweils gleicher konstruktiver Gestaltung der Spulenbereiche 2, 3 wird somit von diesen die gleiche Wärmeenergiemenge in den Rohrstrang 4 eingetragen. Aufgrund der konstruktiven Gestaltung des ersten Spulenbereichs 1 und/oder aufgrund unterschiedlicher Leistungsfähigkeit der Stromquelle E₁ im Vergleich zur Stromquelle E₂ ist dafür gesorgt, daß der Wärmeenergieeintrag im unmittelbaren Nahbereich der Rundschweißnaht 5 deutlich kleiner ist als in den daran anschließenden Teilbereichen des Nachisolierbereichs. Auf diese Weise wird der vor Beginn der induktiven Erwärmung vorhandene Temperaturunterschied im Bereich der Nachisolierung über dessen axiale Länge weitgehend ausgeglichen. Dieser Ausgleich läßt sich um so genauer einstellen, je mehr unterschiedlich ansteuerbare Spulenbereiche im Nachisolierungsbereich vorgesehen werden. In vielen Fällen reicht aber bereits eine Anordnung aus, wie sie in der Figur schematisch dargestellt ist.

### Ausführungsbeispiel:

An einem mit einer Epoxyharz-Haftvermittlerschicht und Polypropylen werksseitig beschichteten Rohrstrang wurde eine Vorrichtung mit dem Aufbau gemäß der Figur eingesetzt. Der Durchmesser des Rohrstrangs, der für eine Offshore-Rohrleitung vorgesehen war, betrug 610 mm, seine Wanddicke 31,8 mm. Die durch eine Rundschweißnaht aneinandergefügten Rohrstücke waren an ihren Enden auf einer Länge von 200 mm unbeschichtet. Der Nachisolierungsbereich hatte daher eine Gesamtlänge von jeweils 400 mm. Nach Durchführung der Schweißung und Prüfung der Schweißnaht mittels Ultraschall bei Wasserankopplung des Ultraschaltprüfkopfs hatte die Stahlrohroberfläche im Bereich der Rundschweißnaht jeweils eine Temperatur von etwa 155°C. Unmittelbar vor dem Ende der werksseitigen Beschichtung betrug die Oberflächentemperatur des Rohres anfänglich jeweils lediglich 25°C. Nach Durchführung der induktiven Erwärmung gemäß vorliegender Erfindung und Abkopplung des Induktors hatte sich über die gesamte Länge des Nachisolierbereichs eine Temperatur eingestellt, die zwischen 187 und 205°C lag. Der ursprünglich bestehende Temperaturunterschied von etwa 130°C war somit nach Durchführung der Vorwärmung auch unter 20°C geschrumpft und stellte kein Hindernis mehr für eine ordnungsgemäße Aufbringung der Epoxyharz-Schicht im Nachisolierbereich dar.

### Bezugszeichenliste

- 1: erster Spulenbereich
- 2: Spulenbereich
- 3: Spulenbereich
- 4: Rohrstrang
- 5: Rundschweißnaht
- 6: Kunststoffummantelung
- E₁: Stromquelle
- E₂: Stromquelle

## Patentansprüche

1. Verfahren zur Vorwärmung eines Rohrstrangs im Bereich von Rundschweißnähten für eine nachfolgende Aufbringung einer Kunststoffummantelung (Nachisolierung), wobei die Nachisolierung zeitlich dicht auf den Vorgang des Rundnahtschweißens folgt,
**dadurch gekennzeichnet,**
**dass** zur Erzielung einer möglichst gleich hohen Oberflächentemperatur im Bereich der Nachisolierung die Vorwärmung in der Weise durchgeführt wird, dass im Verlauf der axialen Länge des Bereichs der Nachisolierung auf die Rohroberfläche bezogen unterschiedliche Wärmeenergiemengen in den Rohrstrang eingebracht werden, wobei der Wärmeenergieeintrag im Nahbereich der Rundschweißnaht jeweils geringer gehalten wird als in den beiderseits daran anschließenden Endbereichen des Bereichs der Nachisolierung.

2. Verfahren nach Anspruch 1,
**dadurch gekennzeichnet,**
**dass** die Vorwärmung als induktive Erwärmung erfolgt.

3. Verfahren nach einem der Ansprüche 1 bis 2,
**dadurch gekennzeichnet,**
**dass** die Erwärmung über die gesamte axiale Länge des Bereichs der Nachisolierung gleichzeitig erfolgt.

4. Verfahren nach einem der Ansprüche 1 bis 2,
**dadurch gekennzeichnet,**
**dass** die Erwärmung abschnittsweise zeitlich nacheinander über die axiale Länge des Bereichs der Nachisolierung erfolgt.

5. Verfahren nach einem der Ansprüche 2 bis 4,
**dadurch gekennzeichnet,**
**dass** der elektrische Strom für die induktive Erwärmung durch Kondensatorentladung erzeugt wird.

6. Verfahren nach einem der Ansprüche 2 bis 5,
**dadurch gekennzeichnet,**
**dass** im Bereich der Nachisolierung in axialer Richtung nebeneinander mehrere Induktionsspulen um den Rohrstrang angeordnet werden und die einzelnen Induktionsspulen durch Stromquellen unterschiedlicher Leistung gespeist werden.

7. Vorrichtung zur Einbringung unterschiedlicher Wärmeenergiemengen in einem Rohrstrang im Bereich von Rundschweißnähten zur Durchführung des Verfahrens nach den Ansprüchen 1 - 3, 5 und 6 mit einem Induktor, der peripher um den Rohrstrang (4) legbar und von einer Stromquelleneinrichtung (Stromquellen E1, E2) mit elektrischem Strom speisbar ist,
**dadurch gekennzeichnet,**
**dass** der in Umfangsrichtung geteilt ausgeführte Induktor mindestens drei Spulenbereiche (1, 2, 3) aufweist, von denen, ein erster (1) im unmittelbaren Nahbereich der Rundschweißnaht (5) anbringbar ist und die übrigen (2, 3) sich in axialer Richtung des Rohrstranges (4) zu beiden Seiten des ersten Spulenbereiches (1) daran anschließen, und dass die Spulenbereiche (1, 2, 3) in der Weise mit angepasster elektrischer Leistung beaufschlagbar sind, dass die Dichte des auf die Rohroberfläche bezogenen Induktionsstromes im Nahbereich der Rundschweißnaht (5) des Rohrstranges (4) kleiner ist als in den axial daran anschließenden Bereichen, wobei zumindest der erste Spulenbereich (1) als von den übrigen Spulenbereichen (2, 3) separate Spule ausgebildet ist, und die Spulenbereiche (1, 2, 3) jeweils an unterschiedliche Stromquellen (E1 bzw. E2) angeschlossen sind.

8. Vorrichtung nach Anspruch 7,
**dadurch gekennzeichnet,**
**dass** die sich bezüglich des ersten Spulenbereichs (1) in axialer Richtung spiegelbildlich gegenüberliegenden Spulenbereiche (2, 3) jeweils gemeinsam in Serienschaltung an dieselbe Stromquelle (E₂) angeschlossen sind.

9. Vorrichtung nach einem der Ansprüche 7 bis 8,
**dadurch gekennzeichnet,**
**dass** die Stromquellen (E₁, E₂) jeweils als Kondensatoren ausgebildet sind, die von einer gemeinsamen elektrischen Energieversorgungseinrichtung geladen werden können.

10. Vorrichtung zur Einbringung unterschiedlicher Wärmeenergiemengen in einen Rohrstrang im Bereich von Rundschweißnähten zur Durchführung des Verfahrens nach den Ansprüchen 1,2,4 und 5, mit einem Induktor, der peripher um den Rohrstrang (4) legbar und von einer Stromquelleneinrichtung (Stromquellen E₁, E₂) mit elektrischem Strom speisbar ist,
**dadurch gekennzeichnet,**
**dass** der Induktor nur ein Bruchteil der axialen Länge des Nachisolierungsbereichs überdeckt und in der Weise mit angepaßter Geschwindigkeit und/oder angepaßter elektrischer Leistung relativ zum Rohrstrang (4) axial bewegbar ist, dass während der Bewegung der auf die Rohroberfläche bezogene Wärmeenergieeintrag im Nahbereich der Rundschweißnaht (5) geringer ist als in den daran anschließenden Endbereichen des Bereichs der Nachisolierung.

11. Vorrichtung nach Anspruch 10,
**dadurch gekennzeichnet,**
**dass** eine Steuer- oder Regeleinrichtung vorgesehen ist, die die Bewegungsgeschwindigkeit des Induktors im Nahbereich der Rundschweißnaht (5) deutlich höher hält als in den anschließenden Endbereichen.

12. Vorrichtung nach Anspruch 10,
**dadurch gekennzeichnet,**
**dass** die Geschwindigkeit des Induktors konstant haltbar ist und dass eine Steuer- oder Regeleinrichtung vorgesehen ist, die die elektrische Leistung des Induktors so einstellt, dass diese während des Passierens des Nahbereichs der Rundschweißnaht (5) deutlich niedriger ist als während des Passierens der anschließenden Endbereiche.

13. Vorrichtung nach einem der Ansprüche 10 bis 12,
**dadurch gekennzeichnet,**
**dass** eine Steuereinrichtung vorgesehen ist, die den Induktor mehrmals über den Nachisolierungsbereich bewegt.

14. Vorrichtung nach einem der Ansprüche 7 bis 13,
**dadurch gekennzeichnet,**
**dass** eine Sensorik zur Erfassung des Profils der Oberflächentemperatur in axialer Richtung des Rohrstrangs vorgesehen ist.

## Claims

1. Method for pre-heating tubing in the area of circumferential welds for the subsequent application of a plastic covering (subsequent insulation), the insulation process following the circumferential welding process very closely in terms of time,
**characterised in that**
in order to achieve a high temperature which is as uniform as possible in the area of the insulation, the pre-heating process is carried out in such a manner that, along the axial length of the insulation area, in relation to the surface of the tube, different amounts of thermal energy are introduced into the tubing, the thermal energy input in the area close to the circumferential weld being kept in each case lower than in the two end areas adjoining it at each side of the insulation area.

2. Method as in claim 1,
**characterised in that**
the pre-heating process is an inductive heating process.

3. Method as in one of claims 1 to 2,
**characterised in that**
the heating process takes place simultaneously over the full axial length of the area of the insulation.

4. Method as in one of claims 1 to 2,
**characterised in that**
the heating process takes place section by section in succession in terms of time over the axial length of the area of the insulation.

5. Method as in one of claims 2 to 4,
**characterised in that**
the electrical current for the inductive heating process is generated by capacitor discharge.

6. Method as in one of claims 2 to 5,
**characterised in that**
a number of induction coils are arranged around the tubing axially side by side in the area of the insulation, and the individual induction coils are supplied with current from sources that have different outputs.

7. Apparatus for introducing different amounts of thermal energy into tubing in the area of circumferential welds in order to carry out the method in accordance with claims 1-3, 5 and 6, having an inductor which is positioned peripherally around the tubing (4) and which is supplied with electrical current from a power source device (power sources E₁, E₂),
**characterised in that**
the inductor, which is divided circumferentially, has at least three coil areas (1, 2, 3), of which the first (1) can be attached in the area directly adjacent to the circumferential weld, and the others (2, 3) adjoin the first coil area (1) at each side axially on the tubing (4), and **in that** the coil areas (1, 2, 3) can be supplied with appropriate electric power in such a manner that the density of the induction current in relation to the surface of the tube is lower in the area close to the circumferential weld (5) of the tubing than in the areas that adjoin it axially, wherein at least the first coil area (1) is made in the form of a coil which is separate from the other coil areas (2, 3), and the coil areas (1, 2, 3) are in each case connected to different power sources (E₁ or E₂).

8. Apparatus as in claim 7,
**characterised in that**
the coil areas (2, 3), which are positioned axially in mirror image opposite each other in relation to the first coil area (1), are each connected jointly in series to the same power source (E₂).

9. Apparatus as in one of claims 7 to 8,
**characterised in that**
each of the power sources (E₁, E₂) is in the form of a capacitor which can be charged from a joint electric power supply device.

10. Apparatus for introducing different amounts of thermal energy into tubing in the area of circumferential welds in order to implement the method in accordance with claims 1, 2, 4 and 5, having an inductor which can be placed peripherally around the tubing (4) and which can be supplied with electrical current from a power source device (power sources E₁, E₂),
**characterised in that**
the inductor covers only a part of the axial length of the insulation area, and can be moved relative to the tubing (4) at an appropriate speed and/or appropriate electrical output in such a way that, during the movement, the thermal energy input in relation to the surface of the tube is lower in the area close to the circumferential weld (5) than in the end areas of the insulation area that adjoin it.

11. Apparatus as in claim 10,
**characterised in that**
there is a control or adjustment facility that keeps the inductor's speed of movement distinctly greater in the area close to the circumferential weld (5) than in the adjoining end areas.

12. Apparatus as in claim 10,
**characterised in that**
the speed of the inductor can be kept constant, and **in that** there is a control or adjustment facility which sets the electrical current of the inductor in such a manner that, while the latter is passing the area close to the circumferential weld (5), it is distinctly lower than it is when passing the adjoining end areas.

13. Apparatus as in one of claims 10 to 12,
**characterised in that**
there is a control facility that moves the inductor repeatedly across the insulation area.

14. Apparatus as in one of claims 7 to 13,
**characterised in that**
there is a sensor system for detecting the profile of the surface temperature of the tubing in an axial direction.

## Revendications

1. Procédé pour le préchauffage d'une ligne de tubes dans la zone des cordons de soudure circulaires pour une application consécutive d'un revêtement de matière plastique (isolation ultérieure), l'isolation ultérieure suivant de très près dans le temps l'opération de soudage par cordon circulaire,
**caractérisé en ce que**, pour parvenir à une température de surface aussi homogène que possible dans la zone de l'isolation ultérieure, le préchauffage est réalisé de telle manière que, sur la longueur axiale de la zone de l'isolation ultérieure, il est appliqué dans la ligne de tubes des quantités d'énergie calorifique différentes rapportées à la surface de tube, l'apport d'énergie calorifique étant maintenu plus faible dans la zone proche du cordon de soudure circulaire que dans les zones d'extrémité de la zone de l'isolation ultérieure situées à la suite des deux côtés.

2. Procédé selon la revendication 1,
**caractérisé en ce que** le préchauffage est effectué par induction.

3. Procédé selon l'une des revendications 1 à 2,
**caractérisé en ce que** le chauffage a lieu en même temps sur toute la longueur axiale de la zone de l'isolation ultérieure.

4. Procédé selon l'une des revendications 1 à 2,
**caractérisé en ce que** le chauffage a lieu par segments, les uns après les autres dans le temps, sur la longueur axiale de la zone de l'isolation ultérieure.

5. Procédé selon l'une des revendications 2 à 4,
**caractérisé en ce que**, pour le chauffage par induction, le courant électrique est produit par décharge de condensateurs.

6. Procédé selon l'une des revendications 2 à 5,
**caractérisé en ce que**, dans la zone de l'isolation ultérieure, plusieurs bobines d'induction sont agencées les unes à côté des autres dans la direction axiale autour de la ligne de tubes et les différentes bobines d'induction sont alimentées par des sources d'alimentation de puissance différente.

7. Dispositif destiné à appliquer des quantités d'énergie calorifique différentes dans une ligne de tubes dans la zone des cordons de soudure circulaires afin de mettre en oeuvre le procédé selon les revendications 1 à 3, 5 et 6, comportant un inducteur qui peut être disposé de manière périphérique autour de la ligne de tubes (4) et alimenté en courant électrique par un dispositif de sources d'alimentation (sources d'alimentation E₁, E₂),
**caractérisé en ce que** l'inducteur réalisé en plusieurs parties dans la direction périphérique présente au moins trois zones de bobine (1, 2, 3), dont une première (1) peut être amenée dans la zone située à proximité immédiate du cordon de soudure circulaire (5) et les autres (2, 3) lui font suite dans la direction axiale de la ligne de tubes (4) des deux côtés de la première zone de bobine (1) et **en ce que** les zones de bobine (1, 2, 3) sont alimentées avec une puissance électrique adaptée de telle manière que la densité de charge du courant d'induction rapporté à la surface de tube dans la zone proche du cordon de soudure circulaire (5) de la ligne de tubes (4) est inférieure à celle des zones qui lui font suite dans le sens axial, au moins la première zone de bobine (1) étant réalisée sous la forme d'une bobine séparée des autres zones de bobine (2, 3) et les zones de bobine (1, 2, 3) étant chacune raccordées à des sources d'alimentation différentes (E₁ ou E₂).

8. Dispositif selon la revendication 7,
**caractérisé en ce que** les zones de bobine (2, 3) placées l'une en face de l'autre en miroir dans la direction axiale par rapport à la première zone de bobine (1) sont raccordées ensemble en série à la même source d'alimentation (E₂).

9. Dispositif selon l'une des revendications 7 à 8,
**caractérisé en ce que** les sources d'alimentation (E₁, E₂) sont réalisées sous forme de condensateurs qui peuvent être chargés par un dispositif d'alimentation électrique commun.

10. Dispositif destiné à appliquer des quantités d'énergie calorifique différentes dans une ligne de tubes dans la zone des cordons de soudure circulaires afin de mettre en oeuvre le procédé selon les revendications 1, 2, 4 et 5, comportant un inducteur qui peut être posé de manière périphérique autour de la ligne de tubes (4) et alimenté en courant électrique par un dispositif de sources d'alimentation (sources d'alimentation E₁, E₂),
**caractérisé en ce que** l'inducteur ne recouvre qu'une fraction de la longueur axiale de la zone d'isolation ultérieure et peut être déplacé dans le sens axial relativement à la ligne de tubes (4) avec une vitesse adaptée et/ou une puissance électrique adaptée, de telle manière que, pendant le déplacement, l'apport d'énergie calorifique rapporté à la surface de tube est plus faible dans la zone proche du cordon de soudure circulaire (5) que dans les zones d'extrémité de la zone de l'isolation ultérieure situées à la suite de chaque côté.

11. Dispositif selon la revendication 10,
**caractérisé en ce qu'**il est prévu un dispositif de commande ou de réglage qui maintient l'inducteur à une vitesse de déplacement nettement plus élevée dans la zone proche du cordon de soudure circulaire (5) que dans les zones d'extrémité situées à la suite de chaque côté.

12. Dispositif selon la revendication 10,
**caractérisé en ce que** la vitesse de l'inducteur peut être maintenue constante et **en ce qu'**il est prévu un dispositif de commande ou de réglage qui règle la puissance électrique de l'inducteur de telle manière que celle-ci soit nettement plus faible pendant le passage de la zone proche du cordon de soudure circulaire (5) que pendant le passage des zones d'extrémité situées à la suite de chaque côté.

13. Dispositif selon l'une des revendications 10 à 12,
**caractérisé en ce qu'**il est prévu un dispositif de commande qui déplace l'inducteur plusieurs fois sur la zone d'isolation ultérieure.

14. Dispositif selon l'une des revendications 7 à 13,
**caractérisé en ce qu'**il est prévu une technique sensorielle pour déterminer le profil de la température de surface dans la direction axiale de la ligne de tubes.
